Europäisches Patentamt

European Patent Office

Office européen des brevets

(19)

(11) Veröffentlichungsnummer: **0 017 010**
**A2**

(12) # EUROPÄISCHE PATENTANMELDUNG

(21) Anmeldenummer: **80101199.0**

(22) Anmeldetag: **10.03.80**

(51) Int. Cl.³: **B 29 D 3/02**

(30) Priorität: **21.03.79 DE 2910984**

(43) Veröffentlichungstag der Anmeldung: **15.10.80**
**Patentblatt 80/21**

(84) Benannte Vertragsstaaten: **AT BE DE FR GB IT NL**

(71) Anmelder: **BAYER AG, Zentralbereich Patente, Marken und Lizenzen, D-5090 Leverkusen 1, Bayerwerk (DE)**

(72) Erfinder: **Preis, Lothar, Dr., August-Kierspel-Strasse 42, D-5060 Bergisch Gladbach 2 (DE)**
Erfinder: **Jehle, Dieter, Dipl.-Ing., Hans-Sachs-Strasse 18, D-5090 Leverkusen (DE)**

(54) **Faserverbundwerkstoffteile mit Einlagen und Verfahren zu ihrer Herstellung.**

(57) Durch den Einbau von Kernen in unidirektional verstärkte Faserverbundwerkstoffteile kann deren hohe Zugfestigkeit in Faserrichtung weit mehr genutzt werden, weil sie ohne besonderen Aufwand besser verankert werden können. Der Querschnitt der Kerne muß sich in Faserrichtung ändern, und es ist wichtig, daß die Fasern an den Kern angeschmiegt verlaufen und er vollkommen eingebettet ist. Die mit Kernen versehenen Faserverbundwerkstoffteile lassen sich kontinuierlich herstellen. Im Imprägnierbad wird der mittlere Bereich des Glasfaserbündels aufgeweitet, die Kerneinlage in diesen Bereich eingeführt und darauffolgend werden die Fasern an den Kern gepreßt.

0017010

BAYER AKTIENGESELLSCHAFT          5090 Leverkusen,Bayerwerk

Zentralbereich                    Hö/Th
Patente, Marken und Lizenzen


Faserverbundwerkstoffteile mit Einlagen und Verfahren
zu ihrer Herstellung


Faserverbundwerkstoffe mit unidirektionaler Faserorientierung haben in den vergangenen Jahren zunehmend
an Bedeutung gewonnen. Sie sind vor allem wegen ihrer
mechanischen Eigenschaften, insbesondere ihrer hohen
Zugfestigkeit, ihrer guten Korrosionsbeständigkeit und
ihres niedrigen spez. Gewichtes interessant. Leider ist
die hohe Festigkeit i.a. nur zu einem Bruchteil ausnutzbar, weil die Verankerung der Verbundwerkstoffteile schwierig und kostspielig ist. Es ist z.B. nicht
möglich, große Kräfte im Faserverbundwerkstoff über
Klemmverbindungen einzuleiten, wie das beim Stahl üblich
ist. Das gleiche gilt für Bolzenverbindungen, Verschraubungen und Verklebungen. Die Krafteinleitung über
geschlossene Faserschlaufen ist sehr kompliziert und
unwirtschaftlich und für kontinuierlich hergestellte
Profile nicht brauchbar.


Le A 19 396

- 2 -

Nach der DE-OS 2 705 438 ist bekannt, daß Faserverbundwerkstoffe zuverlässig und wirtschaftlich dadurch verankert werden können, daß sie in einem Ankerkörper aus einem Bindemittel, dessen Verformungs- und Festigkeitseigenschaften auf die des Zuggliedes abgestimmt sind, eingebettet werden, der die Kraft aus dem Zugglied übernimmt und an eine ihm umgreifende und stützende Ankerhülse weiterleitet. Nachteilig bei dieser Art der Verankerung ist die relativ große Länge der Ankerkörper, die bei hochfesten Verbundwerkstoffen erforderlich ist. Kürzere Verankerungslängen können zwar dadurch erreicht werden, daß man die Ankerhülse konisch oder keilförmig gestaltet und auf diese Weise bei Belastung einen zusätzlichen Querdruck erzeugt. Diese Ausführungsform bedingt jedoch einen erhöhten Aufwand.

Es sind auch unidirektional faserverstärkte Verbundwerkstoffe bekannt, bei denen konus- oder keilförmige Elemente in das aufgebohrte oder gespaltene Profil eingebracht sind. Zur Verankerung dieser Profile sind genau angepaßte Ankerhülsen erforderlich.

Es wurde nun gefunden, daß durch eine besonders ausgebildete Einlage die Verankerung der Profile verbessert werden kann. Gegenstand der Erfindung sind Faserverbundwerkstoffteile mit vorwiegend unidirektionaler Faserorientierung die dadurch gekennzeichnet sind, daß eine Einlage vorhanden ist, an der die Fasern im Verbund mit einer Matrix angeschmiegt verlaufen, wobei sich der Querschnitt der Ein-

Le A 19 396

lage in Faserrichtung in Form und/oder Größe ändert.
Besonders bevorzugt sind Faserverbundwerkstoffprofile bei denen die Einlage ein fadenförmiger Kern mit Verdickungen ist. In vielen Fällen braucht die Einlage nicht durchgehend zu sein, es genügt, wenn es vorzugsweise periodisch zu Querschnittsvergrößerungen und Verkleinerungen kommt; es kann also durchaus Bereiche geben, wo überhaupt keine Einlage vorhanden ist. Es ist entscheidend wichtig, daß die Fasern angeschmiegt an die Einlage bzw. den Kern verlaufen. Gegenstand der Erfindung ist auch ein Verfahren zur Herstellung der faserverstärkten Kunststoffprofile mit einer Einlage.

Als Kernmaterial kommen insbesondere Kunststoffe, beispielsweise thermoplastische Polymere, aber auch Metalle und mineralische Werkstoffe in Frage.

Der Querschnitt der Kerne soll sich in Faserrichtung möglichst stetig ändern, damit der Faserverlauf keinen abrupten Richtungsänderungen unterliegt. Querschnitt des Faserverbundwerkstoffteils und Einlage müssen so aufeinander abgestimmt sein, daß die Einlagen stets vollständig in den Verbundwerkstoff eingebettet sind. Einlagen aus korrosionsanfälligen Werkstoffen werden so dauerhaft vor dem Angriff korrodierender Medien geschützt.

Bevorzugte Formen diskreter Kerne sind Doppelkonus und Doppelkeil.

- 4 -

Aus fertigungstechnischen Gründen wird man die diskreten Einlagen vorzugsweise äquidistant einbringen. In manchen Fällen kann es aber auch notwendig sein, die Kerne nur an vorher bestimmten Stellen, z.B. in den Verankerungsbereichen, einzubringen. Es ist auch möglich, die diskreten Elemente der Einlage über einen Faden aufzureihen, wobei die Abstände der Kernelemente untereinander sehr präzise eingehalten werden können. Es ist nicht notwendig, daß alle aufeinanderfolgenden Elemente gleich sind. Sie können in Form und Größe variieren. Es ist auch endloses Kernmaterial geeignet, dessen Querschnitt sich verdickt und verdünnt.

Prinzipiell können die erfindungsgemäßen Faserverbundwerkstoffteile aus allen bekannten Verstärkungsfasern, Gemischen von Verstärkungsfasern sowie polymeren, metallischen oder keramischen Matrixmaterialen hergestellt werden, typisch ist glasfaserverstärkter Kunststoff (GFK).

In die erfindungsgemäßen Faserverbundwerkstoffe können große Kräfte einfach eingeleitet werden.

Während bei bekannten Verfahren zur Verankerung von Faserverbundwerkstoffen aufwendige Ankerköpfe an den Enden der Teile angeformt werden müssen, oder spezielle Ausbildungen der Ankerhülse und das nachträgliche Einbringen von konus- oder keilförmigen Elementen in das aufgebohrte oder gespaltene Profil erforderlich sind, können die erfindungs-

Le A 19 396

- 5 -

gemäßen Faserverbundwerkstoffe in an sich bekannten, entsprechend den Querschnittsveränderungen geformten Ankerhülsen unproblematisch und wirtschaftlich verankert und die Festigkeit der Verbundwerkstoffe in höherem Maße ausgenutzt werden.

Je nach den zu erwartenden Kräften können im Verankerungsbereich ein oder mehrere Kernelemente hintereinander angeordnet sein. Die erfindungsgemäßen Teile eignen sich aber auch ausgezeichnet zur Einbettung über die ganze Länge wie z.B. bei der Herstellung von Spannbeton im Spannbettverfahren. In diesem Fall ist es günstig, wenn die Kernelemente regelmäßig über die ganze Länge des Verbundwerkstoffteils angeordnet sind.

Nach der Erfindung ist die Herstellung der Faserverbundwerkstoffteile, insbesondere der Profile, kontinuierlich möglich. Es ist ein Verfahren bekannt, Stangen verschiedener Durchmesser aus einer Kombination von Glasfasersträngen und Polyesterharz herzustellen, wobei Glasfasergespinste durch ein Kunstharz imprägniert und anschließend durch eine Ziehform gezogen werden. Die erfindungsgemäßen Faserverbundwerkstoffteile sind damit jedoch nicht herstellbar. Dadurch, daß der mittlere Bereich des imprägnierten Faserbündels aufgeweitet und in diesem Raum die Einlage eingeführt wird und danach die Fasern an die Einlage angepreßt werden, können die erfindungsgemäßen Faserverbundwerkstoffteile hergestellt werden.

In der folgenden Beschreibung werden Ausführungsbeispiele der Erfindung unter Bezugnahme auf die Zeichnungen näher erläutert.

Le A 19 396

- 6 -

Es zeigen:

Fig. 1    Längsschnitt durch eine Vorrichtung zur Herstellung von Profilen;

Fig. 2    Draufsicht auf das Imprägnierbad einer Vorrichtung nach Fig. 1;

Fig. 3    Austrittsöffnung am Imprägnierbad für runde Profile;

Fig. 4    Austrittsöffnung am Imprägnierbad für rechteckige Profile;

Fig. 5    Längsschnitt durch eine Vorrichtung mit flexibler Düse;

Fig. 6    Eintrittsdüse;

Fig. 7    Führungselement an der Kernzulieferung;

Fig. 8    flexible Düse;

Fig. 9    Beispiele für Kernelemente;

Fig. 10   zusammengesetzter Kern aus Doppelkegeln und Verbindungsdrähten;

Fig. 11   Endloskern mit aufgesteckten Verdickungen;

Fig. 12   thermoplastisches Monofil mit verstreckten und unverstreckten Bereichen.

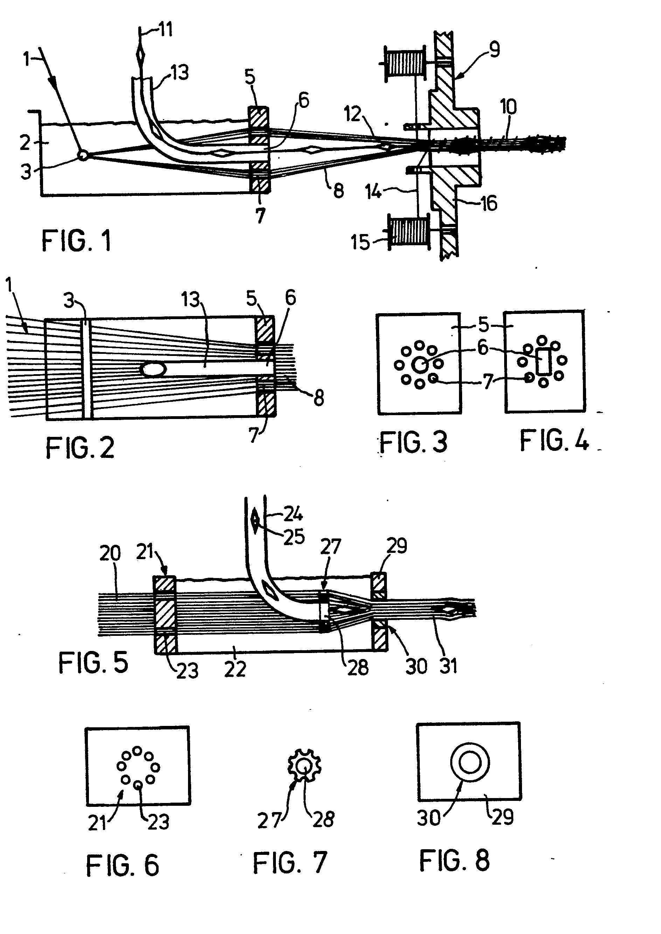

Mit der Vorrichtung gemäß Fig. 1 lassen sich endlose, unidirektional glasfaserverstärkte Kunststoffprofile herstellen. Die ungetränkten Glasfasern bzw. Fadenbündel 1 werden von einem Fadenablaufgatter abgezogen und im Imprägnierbad 2 mit der Matrix, hier einem ungesättigten Polyesterharz, getränkt. Die Glasfäden 1 werden über den Umlenkstift 3 geführt und treten durch Düsen 7 in der Ausgangsplatte 5 aus dem Imprägnierbad 2 aus. Zwei Ausführungsformen der Ausgangsplatte 5 sind in den Figuren 3 und 4 in Draufsicht dargestellt. In der Mitte der Platte

**Le A 19 396**

5 ist eine runde bzw. rechteckige Öffnung 6 je nach dem, ob eine rotationssymmetrische oder eine Einlage mit einem rechteckigen Querschnitt in den mittleren Bereich des Fadenbündels eingebracht werden soll. Die Glasfäden 1 werden durch eine Anzahl kleinerer, um die zentrale Öffnung 6 angebrachter Düsen 7 gezogen. Diese Düsen 7 sind so eng, daß überschüssiges Harz zurückgehalten wird.

Die getränkten Glasfaserbündel werden in der Wickelvorrichtung 9 zu einem runden bzw. rechtechigen Profil zusammengeführt. In Figur 1 besteht die Einlage 11 aus an einem Faden aufgereihten Doppelkegeln 12, die über die Leitung 13 zugeführt wird. Das Verbundwerkstoffteil wird durch den Faden 14, der von einer sich drehenden Spule 15 und sich drehenden Umwindescheibe 16 abläuft, zusammengepreßt. Daß sich an die gezeigte Vorrichtung noch andere, nicht erfindungsentscheidene Vorrichtungen, wie z.B. zum Aushärten und zum Ziehen, anschließen müssen, ist dem Fachmann bekannt. Es ist nicht unbedingt erforderlich, daß die Zugabe der Einlage durch das Imprägnierbad erfolgt. Sie kann auch zwischen der Düse 4, wobei natürlich die zentrale Öffnung 6 entfällt, und der Wickelvorrichtung 9 zugegeben werden.

Der Fadenverlauf im Bereich des Imprägnierbades ist in Draufsicht in Figur 2, 2 Ausführungsformen der Ausgangsplatte 5 sind in den Figuren 3 und 4 dargestellt. Die Bezugszeichen sind die gleichen wie in Figur 1. Der Wickelfaden 14 schließt den Kern 12 so ein, daß die Verstärkungs-

Le A 19 396

fasern gleichmäßig um den Umfang verteilt sind und den Kern vollständig umhüllen; der Faserverlauf ist an die Geometrie des Kernmaterials angeglichen. Die Fasern bilden im ausgehärteten Zustand mit dem Kern einen engen Verbund. Mit dieser Vorrichtung können sowohl Kernmaterial mit sich ändernden Querschnitten als auch diskrete Kernelemente, die auch zusammenhängen können, in den mittleren Bereich des aufgeweiterten Faserbündels 1 gebracht werden. Es kann zweckmäßig sein, zur besseren Haftung das Kernmaterial aufzurauhen, es mit Längsriefen oder mit einem Haftvermittler zu versehen. Auch eine Erwärmung des Kernmaterials zur besseren Benetzung kann angezeigt sein.

Eine andere Ausführungsform einer Vorrichtung zur Durchführung des erfindungsgemäßen Verfahrens ist in Figur 5 dargestellt. Hier werden die von einem Fadenablaufgatter abgezogenen Fäden 20 bereits durch eine Eintrittsdüse 21 in das Imprägnierbad 22 eingeführt. Bei der Herstellung runder Profile hat die Düse 21 etwa die in Figur 6 dargestellte Form, ein Kranz kleiner Bohrungen 23, durch die die Glasfaserbündel eingefädelt werden müssen. Über ein Rohr 24 werden die Einzelelemente 25 eingegeben; die Einzelelemente 25 haben hier auch doppelkegelige Form. Das Rohr 24 endet mit einem Führungsring 27; eine Draufsicht dieses Ringes 27 zeigt Figur 7. Durch die zentrale Öffnung 28 gelangt die Einlage 25 zwischen die Glasfadenbündel. In der Platte 29 ist eine einstufige, flexible, konisch verlaufende Düse 30, die die getränkten Fasern zu einem Strang 31 zusammenfaßt. Das Öffnen und Schließen der flexiblen Düse 30 während des Durchlaufs eines Kern 26 bewirkt, daß sich die Fasern gleichmäßig an den Kern anschmiegen. Eine Draufsicht auf die Platte 29 mit der Düse 30 zeigt Figur 8. Zur Verbesserung des Verbundes zwischen Einlagen und Glasfassersträngen kann das Profil auch in diesem Fall umwickelt werden.

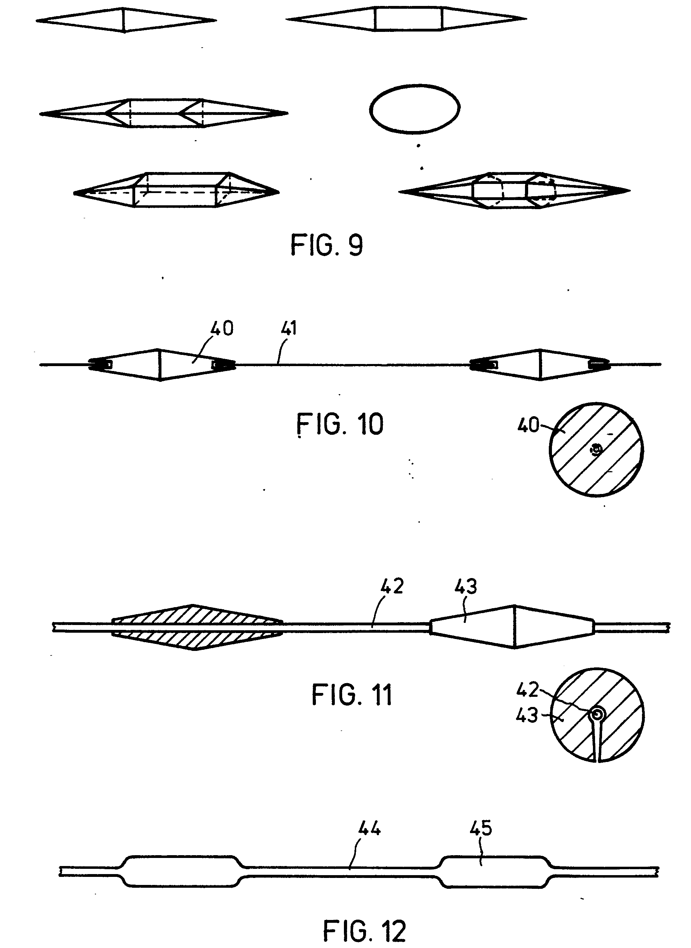

Verschiedene Formen für Kernelemente sind in Figur 9 dargestellt: Doppelkegel, Doppelkegel mit zylindrischem Zwischenstück, prismatische Körper mit beidseitigen Pyramidenendstücken, Ellipsoid.

Solche in Figur 9 dargestellten diskreten Elemente werden einzeln in den aufgeweiteten Bereich des Fadenbündels eingebracht, oder sie sind von vornherein als Endloskern miteinander verbunden. In Figur 10 ist ein Endloskern dargestellt, bei dem an den Enden des metallischen Doppelkegels 40 Bohrungen vorhanden sind, in die Verbindungsstücke eingelassen und verschweißt oder eingepreßt oder verlötet sind. Auf den Draht 42 in Figur 11 sind Verdickungen 43 aufgepreßt. Duroplaste oder Metalle können selbstverständlich auch durch Gießen, Thermoplaste auch durch Spritzen, aufgebracht werden. Ein Kern wie in Figur 11 kann auch durch Extrusion hergestellt werden. Bei einem Endloskern wie in Figur 12 aus Thermoplast-Monofil sind die Querschnittsänderungen durch gezieltes Verstrecken einzelner Bereich erzeugt worden. Verstreckte 44 und unverstreckte Stellen 45 wechseln ab.

Le A 19 396

- 10 -

<u>Patentansprüche</u>

1) Faserverbundwerkstoffteil mit vorwiegend unidirektionaler Faserorientierung, dadurch gekennzeichnet, daß eine Einlage vorhanden ist, an der die Fasern im Verbund mit einer Matrix angeschmiegt verlaufen, wobei sich der Querschnitt der Einlage in Faserrichtung in Form und/oder Größe ändert.

2) Faserverbundwerkstoffteil nach Anspruch 1, dadurch gekennzeichnet, daß sich der Querschitt der Einlage in Faserrichtung periodisch ändert.

3) Faserverbundwerkstoffteil nach Anspruch 1, dadurch gekennzeichnet, daß bereichsweise keine Einlage vorhanden ist.

4) Profilartiges Faserverbundwerkstoffteil nach Ansprüchen 1 bis 3, dadurch gekennzeichnet, daß die Einlage ein fadenförmiger Kern mit Verdickungen ist.

5) Faserverbundwerkstoffteil nach Ansprüchen 1 bis 4, dadurch gekennzeichnet, daß die Einlage bzw. die Verdickungen aus thermoplastichen oder duroplastischen Kunststoffen, Metallen oder mineralischen Werkstoffen bestehen.

6) Verfahren zur Herstellung von Faserverbundwerkstoffteilen nach Anspruch 1 bis 5, wobei Faserbündel durch ein Kunstharz-Imprägnierbad und Düsen gezogen

<u>Le A 19 396</u>

werden, dadurch gekennzeichnet, daß der mittlere Bereich des Faserbündels aufgeweitet und diesem Raum die
Einlage eingeführt wird und danach die Fasern an die
Einlage gepreßt werden.

FIG. 1

FIG. 2

FIG. 3  FIG. 4

FIG. 5

FIG. 6    FIG. 7    FIG. 8

FIG. 9

40   41

FIG. 10

40

42   43

FIG. 11

42
43

44   45

FIG. 12